# EUROPEAN PATENT APPLICATION

(11) **EP 4 809 820 A1**
(43) Date of publication of application: **23.09.2026**
(21) Application number: 25210737.0
(22) Date of filing: 23.10.2025
(51) Int. Cl.: A01J 5/04, A01J 5/08, A01J 7/00

(54) **METHOD OF MACHINE MILKING FOR LOWERING AIR BORNE MICROBIAL AND OXYGEN CONTAMINATIONS IN RAW MILK**

(30) Priority: 17.03.2025 FI 20255222
(71) Applicant: Alatossava, Tapani, 00790 Helsinki (FI); Munsch-Alatossava, Patricia, 00790 Helsinki (FI)
(72) Inventor: Alatossava, Tapani, 00790 Helsinki (FI); Munsch-Alatossava, Patricia, 00790 Helsinki (FI)
(74) Representative: Laine IP Oy

(57) **Abstract**

The present invention relates to the method of machine milking to use sterile, pure nitrogen gas (N₂) as the continuous gas flow into the top part of the teat cup liner (gas flow pressure about 120 to 140 kPa compared to atmospheric air pressure of about 100 kPa) in order to produce a constant sterile N₂ gas blanket and by that way to prevent the environmental air with its contaminating microbes to access the interior of the teat cup liner and further the milk collection tube, and accordingly to reduce the level of microbes present in raw milk after machine milking. At the same time, oxygen (O₂) in air is prevented to get dissolved in raw milk before, during and after machine milking, too, and consequently the dissolved O₂ content in raw milk after the milking phase is kept as low as originally found in milk inside the cistern of the udder. With this method, the raw milk obtained is both ultra-clean and ultra-fresh compared to the raw milk obtained by conventional machine milking.

## Description

### FIELD

The present invention relates to methods for improving the safety, quality and durability of foodstuffs and of the raw materials which are used to produce them.

### BACKGROUND

Machine milking achieved by a portable milking equipment, a pipeline milking system or an automatic milking system (a milking robot) is a standard procedure at modern dairy farms. All these three alternatives are using the same basic principle of machine milking: the upper part of the rubber-based teat cup liner is connected with a teat under constant vacuum (pressure typically about 50 kPa, that is about 0.5 bar) created by a vacuum pump connected to a vacuum tube or pipeline sucking external air through the inner space of the teat cup liner connected to a milk collecting tube. The pulsation chamber (the space between the rubber liner and the solid teat cup) has regularly alternating pressure (pulse cycles about 1 sec) fluctuating between atmosphere pressure (about 100 kPa, that is about 1 bar) during so-called massage phase, and the pressure inside the teat cup liner (typically about 50 kPa, that is about 0.5 bar) during so-called suction phase, created by the same vacuum pump as the constant vacuum inside the teat cup liner. As a result, the raw milk is drawn during the suction phase through the teat channel from the teat cistern and further from the cistern of the udder quarter. Because the udder of the cow contains four mammary glands (four udder quarters), the milking machine designed for the dairy cow contains four teat cup units (one for each teat), which are attached to the milk claw and further connected to the milk pail or to the milk pipeline of the receiver tank by the milk collecting tube.

Milk secreted into lumen of the alveolus is considered as sterile in a healthy (not infected) udder, but some native bacteria (like lactic acid bacteria), attached to the epithelial cells of the teat cistern and the channel, or to the skin of the external teat end can be released to the flowing milk during the milking process, and consequently the resulting raw milk is practically never sterile. However, most of the contaminating microbes (mainly bacteria) are originating from the environment including air and its particles, soil, water, feed, equipments, other animals and human. Accordingly, milking hygiene is of essential importance to recover a raw milk of high quality: First, the microbiological quality of raw milk at farm level partially determines the price paid to the dairy farmer. Second for the dairy industry a raw milk of low microbiological quality negatively impacts the quality of all dairy products, liquid or solid types. In the case of conventional machine milking, unavoidably air borne contaminating microbes are taken inside the teat cup liner and further into the milk collection tube before the upper end of the teat cup liner is connected to the teat by vacuum suction as well as when the teat cup liner is disconnected from the teat after the milking phase. Accordingly, the bacterial content of the raw milk, even after the most carefully performed machine milking, contains typically more than 10³ CFU (colony forming units) per ml of raw milk, when analysed by the standard plating system.

### SUMMARY

The present invention is directed to a method of machine milking for lowering air borne microbial and oxygen contaminations in raw milk, the method comprising a step of flowing sterile nitrogen gas (N₂) continuously into the top of the teat cup liner in order to produce constant, sterile N₂ gas blanket for preventing the microbe contaminated environmental air from accessing the interior of the teat cup liner and further the milk collection tube of the milking machine.

### BRIEF DESCRIPTION OF THE DRAWINGS

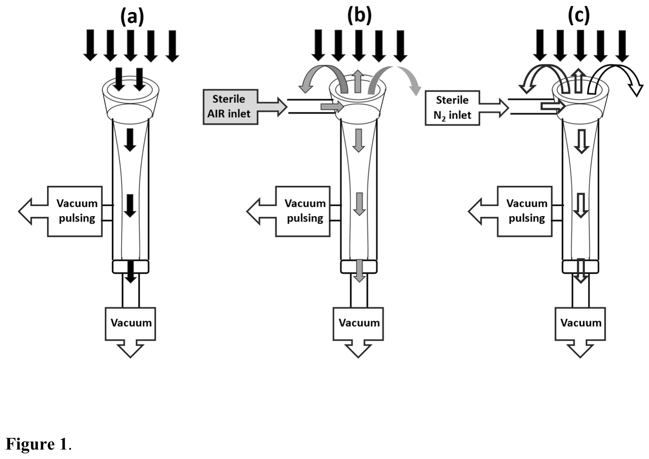

FIGURE 1. A sectional presentation of an embodiment of the teat cup and gas flows around and inside the teat cup liner, in a state ready for machine milking according to: (a) the conventional type of teat cup, (b) the teat cup based on the sterile milking technology described by Fischer (1) and Fischer Planning Ltd. (2), and (c) the teat cup based on the invention disclosed here.
Symbols: The arrows depict
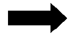 Microbe contaminated air (environmental air pressure about 100 kPa)
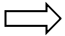 Sterile air (gas flow pressure about 120-140 kPa, overpressure 20-40 kPa)
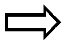 Sterile N₂ gas (gas flow pressure about120-140 kPa, overpressure 20-40 kPa).

### EMBODIMENTS

In order to produce ultra-clean raw milk with a machine milking, Friedrich Fisher has disclosed an invention (1), where sterile air is flowed constantly into the top of the each teat cup liner at slightly higher pressure (overpressure about 20 to 40 kPa, 0.2 to 0.4 bar) than atmospheric pressure (about 100 kPa, 1 bar), to prevent the microbe contaminated external air to access the interior of the teat cup liner and further the milk collection tube, at the stage ready for machine milking or after the teat cup is disconnected from the teat after milking phase. Accordingly, the microbe contaminated air is replaced by the introduced pressured sterile air. Using this improved milking technology, 10- to 100-fold lower CFU per ml values in raw milk compared to the standard control were later reported (2) giving strong proofs on the efficiency of this technology.

The N₂ gas flushing technology has been introduced to prevent or to alleviate the growth of microbes in various food materials and food chains in open systems (3, 4). This technology could be applied throughout the cold chain of raw milk storage and transportation from the farm tank until the dairy silo steps (5). It has been demonstrated that psychrotrophs, and especially pseudomonads, could be efficiently inhibited (6), but mesophiles, too (7). In addition, the dissemination of antibiotic resistance (AR) via food (8), biofilm formation (9) and enzyme promoted biopolymer degradation activities like proteolysis and phospho/lipolysis (10, 11) are hindered by this technology. Beside microbiological growth and spoilage alleviation, oxygen (O₂) promoted chemical, nutritional and/or sensory defects like auto-oxidation of unsaturated fatty acid residues and reduction of antioxidant components in food materials, which all are avoided by N₂ gas flushing technology through the elimination of O₂ present in air (about 21 vol-%) in open food systems (10, 12). However, in these published studies, the machine milking step, the first critical step of the whole raw milk process chain from farm to dairy, has not been considered.

The present invention surprisingly combines the benefits of the sterile air technology applied for machine milking as described by Fischer (1, 2) and the recorded beneficial effects of the patented N₂ gas flushing technology (3 - 12) regarding microbiological, biochemical, technological, nutritional and sensorial features of raw milk. The major new feature in this invention consists in the use of sterile, pure N₂ gas instead of sterile air, as the continuous overpressured gas flow into the top part of the teat cup liner (preferably with a gas flow pressure of about 120 to 140 kPa compared to atmospheric air pressure of about 100 kPa), in order to produce the constant sterile N₂ gas blanket to prevent the environmental microbe contaminated air and its O₂ to access the interior of the teat cup liner and further the milk collection tube. Accordingly, O₂ in air is excluded from raw milk, too, during and after machine milking, and consequently the dissolved O₂ content in raw milk after milking phase is kept as low as in milk found originally in the cistern of the udder. By exhibiting simultaneously a lower microbial and a lower dissolved O₂ content, this kind of raw milk could be considered as ultra-clean and ultra-fresh, compared to the raw milk obtained by the conventional machine milking or by the sterile milking technology.

**Figure 1** is a schematic drawing to demonstrate the basic structural and functional differences between the three alternative types of the teat cup, in a state ready for machine milking; (a) the conventional type of teat cup, (b) the teat cup based on the sterile milking technology described by Fischer (1) and Fischer Planning Ltd. (2), and (c) the teat cup based on the invention considered here.

Accordingly, the present invention is directed to a method of machine milking for lowering air borne microbial and oxygen contaminations in raw milk, wherein the method comprises a step of flowing sterile nitrogen gas (N₂) continuously into the top of the teat cup liner in order to produce constant, sterile N₂ gas blanket for preventing the microbe contaminated environmental air to access the interior of the teat cup liner and further the milk collection tube of the milking machine.

In a preferred embodiment, the volumetric flow rate of sterile N₂ is greater than the fluid flow rate which is discharged through the milk tube connection, such that a sterile N₂ gas blanket is obtained to exclude the access of the external microbe contaminated air with its O₂.

In another preferred embodiment, when said nitrogen gas (N₂) is used, its purity is at least 95% per volume, preferably at least 99% per volume, in particular at least 99.9% per volume.

In another preferred embodiment, nitrogen gas (N₂) is sterilized before the inlet to the teat cup for example by micro-filtration using filter membranes with a pore size diameter at least 0,4 µm, preferably 0,2 µm, in particular 0,1 µm, before entering the top of the teat cup liner.

In another preferred embodiment, the nitrogen gas (N₂) source can be a separate, pressured N₂ storage bottle, a separate, pressured N₂ storage tank, or a pressured N₂ storage bottle/tank connected to a N₂ gas generator unit.

In another preferred embodiment, the nitrogen gas (N₂) source can be used for the machine milking alone, or preferably together with any additional uses of N₂ source at farm level like the use of the N₂ gas flushing for raw milk collected and stored in a cooled farm tank, in order to exclude microbe contaminated environmental air after machine milking.

In another preferred embodiment, the use of portable milking equipment, a separate, pressured N₂ storage bottle is the most practical N₂ source unit, and for the use of a pipeline milking system or an automatic milking system a separate, a pressured N₂ storage bottle/tank with or without a N₂ gas generator unit are the alternatives, depending on the needs of N₂ consumption for machine milking and other possible uses of N₂ at a particular farm.

In another preferred embodiment, the flow of nitrogen gas (N₂) is pressurized, preferably with overpressure about 20 to 40 kPa, or 0.2 to 0.4 bar.

### REFERENCES

1. Fischer, F. (2016) Melkanlage, Melkgeschirr und Zitzengummi sowie dazugehöriges Betreibsverfahren. Patent DE 10 2015 116 333 B3.
2. Fischer Planning Ltd. (2021) Sterile milking technology. International Dairy Magazine July/August 2021:24-25.
3. Alatossava, T. & Munsch-Alatossava, P. (2011) Menetelmä elintarvikkeiden käsittelemiseksi. Patentti FI 122334 B.
4. Alatossava, T. & Munsch-Alatossava, P. (2018) Method of treating foodstuff. Patent EP 2 162 021 B1.
5. Munsch-Alatossava, P. & Alatossava, T. (2021) The potential benefits of N2 gas flushing technology for various dairy products: A sustainable approach that proved to be multiadvantageous for preserving the quality and safety of raw milk during its storage. Frontiers in Sustainable Food Systems 5: Article 790205 (9 pages).
6. Gschwendtner, S. Alatossava, T. Kubik, S., Mrkonjic Fuka, M., Schloter, M. & Munsch-Alatossava, P. (2016) N2 gas flushing alleviates the loss of bacterial diversity and inhibits psychrotrophic Pseudomonas during the cold storage of bovine raw milk. PLoS ONE 11: e0146015 (9 pages).
7. Munsch-Alatossava, P., Gursoy, O. & Alatossava, T. (2010) Potential of nitrogen gas (N2) to control psychrotrophs and mesophiles in raw milk. Microbiol. Res. 165: 122-132.
8. Munsch-Alatossava, P., Jääskeläinen, S., Alatossava, T. & Gauchi, J.-P. (2017) N2 gas flushing limits the rise of antibiotic-resistant bacteria in bovine raw milk during cold storage. Frontiers in Microbiology 8: Article 655 (12 pages).
9. Munsch-Alatossava, P. & Alatossava, T. (2020) Potential of N2 gas flushing to hinder dairy-associtated biofilm formation and extension. Frontiers in Microbiology 11: Article 1675 (14 pages).
10. Munsch-Alatossava, P., Ibarra, D., Youbi-Idrissi, M. & Alatossava, T. (2019) N2 gas-flushing prevents bacteria-promoted lipolysis and proteolysis and alleviates auto-oxidation in bovine raw milk during cold-storage. Frontiers in Sustainable Food Systems 3: Article 41 (8 pages).
11. Munsch-Alatossava,P., Käkelä, R., Ibarra, D., Youbi-Idrissi, M. & Alatossava, T. (2018) Phospholipolysis caused by different types of bacteria phospholipases during cold storage of bovine raw milk is prevented by N2 gas flushing. Frontiers in Microbiology 9: Article 1307 (16 pages).
12. Gursoy, O., Munsch-Alatossava, P, Ertan, K., Yilmaz, Y. & Alatossava, T. (2017) Effect of nitrogen gas flushing treatments on total antioxidant capacity and ascorbic acid content in raw bovine milk during cold storage. Mljekarstvo 67: 155-165.

## Claims

1. A method of machine milking for lowering air borne microbial and oxygen contaminations in raw milk, **characterized in that** the method comprises a step of flowing sterile nitrogen gas (N₂) continuously into the top of the teat cup liner in order to produce constant, sterile N₂ gas blanket for preventing the microbe contaminated environmental air to access the interior of the teat cup liner and further the milk collection tube of the milking machine.

2. A method according to claim 1, **characterized in that** the volumetric flow rate of sterile N₂ is greater than the fluid flow rate which is discharged through the milk tube connection, such that a sterile N₂ gas blanket is obtained to exclude the access of the external microbe contaminated air with its O₂.

3. A method according to claim 1 or 2, **characterized in that** nitrogen gas (N₂) is used, the purity is at least 95% per volume, preferably at least 99% per volume, in particular at least 99.9% per volume.

4. A method according to any of claims 1-3, **characterized in that** nitrogen gas (N₂) is sterilized before the inlet to the teat cup for example by micro-filtration using filter membranes with a pore size diameter at least 0,4 µm, preferably 0,2 µm, in particular 0,1 µm, before entering the top of the teat cup liner.

5. A method according to any of claim 1 to 4, **characterized in that** the nitrogen gas (N₂) source can be a separate, pressured N₂ storage bottle, a separate, pressured N₂ storage tank, or a pressured N₂ storage bottle/tank connected to a N₂ gas generator unit.

6. A method according to claim 5, **characterized in that** the nitrogen gas (N₂) source can be used for the machine milking alone, or preferably together with any additional uses of N₂ source at farm level like the use of the N₂ gas flushing for raw milk collected and stored in a cooled farm tank, in order to exclude microbe contaminated environmental air after machine milking.

7. A method according to claim 5 or 6, **characterized in that** for the use of portable milking equipment, a separate, pressured N₂ storage bottle is used as the N₂ source, and for the use of a pipeline milking system or an automatic milking system a separate, a pressured N₂ storage bottle/tank with or without a N₂ gas generator unit is used as the N₂ source, depending on the needs of N₂ consumption for machine milking and other possible uses of N₂ at a particular farm.

8. A method according to any of claims 1-7, **characterized in that** the flow of nitrogen gas (N₂) is pressurized, preferably with overpressure about 20 to 40 kPa, or 0.2 to 0.4 bar.
